# EUROPEAN PATENT SPECIFICATION

(11) **EP 4 530 483 B1**
(45) Date of publication and mention of the grant of the patent: **16.09.2026**
(21) Application number: 23200355.8
(22) Date of filing: 28.09.2023
(51) Int. Cl.: F16B 21/07, F16B 35/04, F16B 37/08

(54) **FASTENING DEVICE FOR FASTENING A MECHANICAL ELEMENT WITH A SUPPORT STRUCTURE, FASTENING SYSTEM, ATTACHMENT METHOD AS WELL AS DETACHMENT METHOD**
BEFESTIGUNGSVORRICHTUNG ZUR BEFESTIGUNG EINES MECHANISCHEN ELEMENTS MIT EINER TRÄGERSTRUKTUR, BEFESTIGUNGSSYSTEM, BEFESTIGUNGSVERFAHREN SOWIE LÖSEVERFAHREN
DISPOSITIF DE FIXATION POUR FIXER UN ÉLÉMENT MÉCANIQUE À UNE STRUCTURE DE SUPPORT, SYSTÈME DE FIXATION, PROCÉDÉ DE FIXATION ET PROCÉDÉ DE DÉTACHEMENT

(43) Date of publication of application: 02.04.2025
(73) Proprietor: Airbus Operations GmbH, 21129 Hamburg (DE)
(72) Inventor: Petersen, Lauritz, Hamburg (DE); Benthien, Hermann, Hamburg (DE)
(74) Representative: Isarpatent

(56) References cited:
- EP-A1- 0 791 759
- EP-A2- 0 229 885
- EP-A2- 2 738 401
- DE-A1- 3 842 609
- US-A- 2 416 873
- US-A1- 2021 348 632

## Description

The invention relates to a fastening device for fastening a mechanical element with a support structure. The invention is furthermore concerned with fastening system containing such a fastening device. Further, the invention relates to an attachment method for fastening a fastening device for fastening a mechanical element with a support structure and a detachment method for unfastening a fastening device for fastening a mechanical element with a support structure.

Modern vehicles such as aircraft and spacecraft are manufactured in sections, that are pre-assembled. For attaching further components to those sections attachment systems are needed. Especially in the field of aircraft and spacecraft a high precision in manufacturing is important.

Further, the interior lining of aircraft is generally composed of individual elements, in which substantially plates or panels are placed adjacent to each other in a given framework or support structure. These plates or panels serve for example as cabin fitting elements.

Nevertheless, each section and component or plate/panel of the aircraft has different manufacturing tolerances, which are to match during assembly processes.

For example, document DE 10 2019 118 494 A1 describes an assembly system which is particularly suitable for mounting components, in particular interior equipment components, in an aircraft and thereby fulfilling a tolerance compensation function. Furthermore, a method for mounting a component, in particular an aircraft interior equipment component, by means of such a mounting system, as well as a component arrangement mounted by means of such a mounting system is described. Furthermore, in document DE 10 2020 116 253 A1 a fastener assembly comprising a fastener element having an electroactive polymer actuator is described. US 2 416 873 A discloses a known fastening device.

Aspects of the invention may provide solutions for an alternative fastening device for fastening mechanical elements to support structures.

According to the invention, this problem is solved in each case by the subject matters of the independent claims. The invention is a fastening device as described in claim 1, a fastening system according to claim 9, an attachment method according to claim 11 and a detachment method according to claim 13.

According to a first aspect of the invention, a fastening device for fastening a mechanical element with a support structure is provided. In particular, a fastening device for fastening a cabin fitting element to a frame of an aircraft is provided. The fastening device comprises a locking bolt for mounting a mechanical element, wherein the locking bolt comprises at least one recess, which is located on at least a section of the shell surface of the locking bolt. Further, the fastening device comprises a locking mechanism, which is mountable to a support structure and comprises an elastically deformable element for engaging with the at least one recess of the locking bolt. The elastically deformable element is configured to block a movement of the locking bolt relative to the locking mechanism along a longitudinal axis against an installation direction and to not block the movement in an installation direction.

According to a second aspect of the invention, a fastening system is provided. The fastening system comprises a support structure and a fastening device according to the first aspect of the invention, which is arranged at the support structure. Furthermore, the fastening system comprises a mechanical element, which is positively locked with the fastening device.

According to a third aspect of the invention, an attachment method for fastening a fastening device for fastening a mechanical element with a support structure is provided. In particular, an attachment method for fastening a fastening device according to the first aspect of the invention is provided. The attachment method comprises axially moving a locking bolt of the fastening device in an installation direction into a locking mechanism of the fastening device, wherein the locking mechanism comprises an elastically deformable element for engaging with at least one recess of the locking bolt, wherein the elastically deformable element is configured to block a movement of the locking bolt relative to the locking mechanism along a longitudinal axis against the installation direction and to not block the movement in the installation direction.

According to a fourth aspect of the invention, a detachment method for unfastening a fastening device for fastening a mechanical element with a support structure is provided. In particular, a detachment method for unfastening a fastening device according to the first aspect of the invention is provided. The detachment method comprises releasing a bolt head of a locking bolt of the fastening device from a shaft of the locking bolt and axially moving the shaft in a installation direction until the shaft is released from a locking mechanism of the fastening device.

A fundamental concept of the invention is to attaching a blind locking fastening device or a continuous secondary structure interface, respectively, with a nearby stepless tolerance compensation for high load introduction on a limited space of the support structure. The fastening system is installed by pushing the locking bolt into the locking mechanism, wherein the locking mechanism is mounted at a predetermined position on the support structure. The shell surface of the locking bolt preferably corresponds to the inner shell of the locking mechanism. The locking bolt is configured to be slidable into the locking mechanism. The locking bolt passes through an opening of the mechanical element for having a positively-locking connection or form fit, respectively, wherein the bolt head has greater outer dimensions than the opening of the mechanical element such that the positively-locking connection or form fit, respectively, works between the bolt head and the locking mechanism. Thereby, the fastening device works according to a finger-trap principle. The fastening device only allows movement of the locking bolt in the installation direction.

In the installation direction the locking bolt is slidable in relation to the locking mechanism in a locked position of the fastening device. In particular, the elastically deformable element engages positively-locking with the at least one recess. The elastically deformable element can be made of a material with elastic material properties or comprise at least one stiff section and at least one elastically deformable section. The elastically deformable section can be made of a material with elastic material properties, like rubber, or configured as a torsion spring or similar. When the locking bolt is housed in the locking mechanism, the elastically deformable element is at least sectionwise in contact with the locking bolt, in particular during sliding of the locking bolt in relation to the locking mechanism in the installation direction. The elastically deformable section brings the elastically deformable element into contact with the locking bolt and into engagement with the at least one recess of the locking bolt, when the locking bolt is inserted into the locking mechanism. When the locking bolt is under load the torsion spring or similar is not holding the locking bolt. Self-locking of the locking bolt works just by the finger-trap principle.

The present invention is suitable for blind locking since the locking mechanism can be pre-assembled. With a pre-assembled locking mechanism the locking bolt can be mounted from one side only, wherein the locking bolt is fixed automatically when inserted into the locking mechanism.

As a result, once the locking bolt is inserted into the locking mechanism the locking bolt can be mechanically connected to the locking mechanism. Therefore, for example, pulling back the locking bolt or against the installation direction, respectively, relative to the locking mechanism is blocked, when the elastically deformable element engages with the at least one recess.

A particular advantage in the solution according to an aspect of the invention is that manufacturing efforts for assembling cabin fitting elements with the frame of the aircraft is reduced. Furthermore, the fastening device can be used for attaching a primary structure interface to the support structure with combining an inplane tolerance compensation of the manufacturing tolerances of the support structure. Therefore, further attachments, which are tolerance sensitive, can be attached to the primary structure interface. A guided installation of the mechanical element can lead to an automated tolerance compensation when mounted with the fastening device.

Further advantages in the solution according to an aspect of the invention can be a smooth and continuous load introduction in the primary structure and/or a light and cheap tolerance compensation, in particular a stepless tolerance compensation on a short distance. Furthermore the present invention provides a master - slave principle for the adjustment of the secondary structure. Advantageous embodiments and further developments emerge from the description with reference to the figures.

According to the invention, the locking bolt comprises a shaft and a bolt head, which is releasably fixed on the shaft. In particular, the bolt head is screwed on the shaft. For example, the shaft or the bolt head has an inner thread, and the bolt head or the shaft, respectively, has a corresponding outer thread. The skilled person can configure the releasable fixation of the shaft and the bolt head such that any load can be carried by the locking bolt. For example, the skilled person can choose thread parameters, like a thread height, a pitch or a thread form, of the thread connection according to the load of the mechanical element.

According to the invention, the bolt head comprises a spherical shape for rotary attachment of the mechanical element.

According to some further aspects of the invention, the bolt head comprises an end extending away from the shaft of the locking bolt, wherein the end comprises at least one recess for engaging with an interface of a secondary structure. The at least one recess of the bolt head can be configured like the at least one recess of the locking bolt. Therefore, coupling of other attachments is enabled on the end of the bolt head when mounting these other attachments by means of the interface. According to some further aspects of the invention, the at least one recess is circumferential around the shell surface of the locking bolt or has a rectangular, a triangular or a curved cross-sectional shape. Furthermore, the at least one recess is circumferential around the shell surface of the locking bolt and has a rectangular, a triangular or a curved cross-sectional shape. For example, the at least one recess can be configured as a circumferential groove. The at least one recess can comprise a plurality of recesses, which are arranged between a bolt head and a front area of the locking bolt. In particular, each recess of the plurality of recesses has the same cross-sectional shape. Advantageously, the locking device can be mounted to support structures with variable thicknesses. The plurality of recesses can be configured as a tooth profile. Thus, tolerance compensation in the installation direction can be provided via the tooth profile.

Further, the circumferential recess would not only apply to a cylindrical locking bolt, but also to a cuboid or a mixed form of locking bolts or to a rectangular, a square, a triangular or a curved, in particular a circular, cross-sectional shape of the shaft of the locking bolt. Thereby, the at least one recess extends in a peripheral direction around the shell surface of the locking bolt, irrespective of the shape of the locking bolt. Alternatively or additionally, the at least one recess of the locking bolt has a rectangular, a triangular, a curved or a combination thereof cross-sectional shape. The locking mechanism has a mutually adapted shape.

According to some further aspects of the invention, the at least one recess substantially extends along the longitudinal axis and is arranged between a bolt head and a front area of the locking bolt. For example, the at least one recess can be configured as a longitudinal groove. The at least one recess can comprise a plurality of recesses, which are arranged around the shell surface of the locking bolt, in particular evenly distributed around the shell surface of the locking bolt. In particular, each recess of the plurality of recesses has the same cross-sectional shape. Thus, the fastening device can have a self-locking function, in particular prior to a locked position of the fastening device, since the locking bolt may continuously slide into the locking mechanism, wherein the self-locking function is present in an intermediate position, in which the elastically deformable element engages with at least one of the plurality of recesses.

In some embodiments, the fastening device can comprise a plurality of recesses, wherein at least one recess of the plurality of recesses is circumferential around the shell surface of the locking bolt, and wherein at least one recess of the plurality of recesses substantially extends along the longitudinal axis and is arranged between a bolt head and a front area of the locking bolt.

According to some further aspects of the invention, the elastically deformable element is pre-tensioned when in contact with the locking bolt or engaged with the at least one recess.

According to some further aspects of the invention, the elastically deformable element comprises at least one pivotable arm, which is positioned at least sectionwise around the longitudinal axis and has a pivot axis substantially perpendicular to the longitudinal axis. The pivotable arm can be hinged to the locking mechanism by means of a torsion spring or similar. For example, the at least one arm can comprise two, three or four pivotable arms.

Optionally, the fastening device may comprise an indicator for indicating a proper mounting of the fastening device. The indicator can be provided as a visual, tactile and/or acoustical indicator. One example for a visual indicator could be a colored line, which should be visible or not visible after the attachment of the fastening device.

According to some further aspects of the invention, the fastening device further comprises a bush, which is releasably connectable to the locking mechanism and configured to guide the locking bolt through the locking mechanism. In particular, the bush is screwed on the locking mechanism. For example, the locking mechanism has an inner thread, and the bush has a corresponding outer thread. Alternatively or additionally, the locking mechanism can be firmly bonded to the support structure. Thereby, the locking mechanism can be welded or adhered to the support structure.

Optionally, the locking bolt comprises a tapered front area for self-centering. In other words, the locking bolt has a cone shaped top for self-centering. Alternatively or additionally, the locking bolt can have a rectangular, a square, a triangular or a curved, in particular a circular, cross-sectional shape. For example, the shaft of the locking bolt has a rectangular, a square, a triangular or a curved, in particular a circular, cross-sectional shape.

According to some aspects of the invention, the support structure is configured as a frame of an aircraft, and wherein the mechanical element is configured as a cabin fitting element. Thus, aircraft components are well-tested and mostly standardized.

In some embodiments of the invention, the fastening device can be installed in an opening of the frame. Thus, a direct load transfer of the mechanical element into the support structure can be enabled. Furthermore, this installation can reduce the space needed for the fastening system.

The support structure can comprise a first side and a second side opposite to the first side. The locking mechanism can be arranged at the first side of the support structure, for example. The mechanical element can be arranged at the second side.

According to some further aspects of the invention, the attachment method further comprises mounting the locking mechanism to a support structure at a first side of the support structure facing in the installation direction. The first side can correspond to a back side of the support structure. Thus, the locking mechanism can be mounted to the first side or back side, respectively, of the support structure, wherein the installation direction is directed from a front side or second side, respectively, of the support structure to the backside.

According to some further aspects of the invention, in the step of releasing of the detachment method, the bolt head is unscrewed from the shaft, and wherein, in the step of axially moving, the shaft is pulled or pushed in the installation direction.

According to a further aspect of the invention, an aircraft comprising the fastening device or the fastening system may be provided.

The present invention is explained more specifically below on the basis of the exemplary embodiments indicated in the schematic figures, in which:
- Fig. 1: shows a schematic illustration of a fastening device for fastening a mechanical element with a support structure according to an embodiment of the invention;
- Fig. 2: shows a schematic illustration of the fastening device of Fig. 1 in an intermediate position;
- Fig. 3: shows a schematic illustration of the fastening device of Fig. 1 in another intermediate position;
- Fig. 4: shows a schematic illustration of the fastening device of Fig. 1 in a locked position;
- Fig. 5: shows a schematic illustration in a side view of a fastening system for fastening a mechanical element with a support structure according to a further embodiment of the invention;
- Fig. 6: shows a schematic illustration in a perspective view of the fastening system of Fig. 5 focusing on a first side of the support structure;
- Fig. 7: shows a schematic illustration in a perspective view of the fastening system of Fig. 5 focusing on a second side of the support structure;
- Fig. 8: shows a schematic illustration in an explosion view of the fastening system of Fig. 5;
- Fig. 9: shows a schematic illustration in a cut view of a locking bolt according to a further embodiment of the invention;
- Fig. 10: shows a schematic illustration in a perspective view of a locking mechanism, which is mounted to a support structure;
- Fig. 11: shows a flow chart for an attachment method for fastening a fastening device for fastening a mechanical element with a support structure according to a further embodiment of the invention;
- Fig. 12: shows a flow chart for a detachment method for unfastening a fastening device for fastening a mechanical element with a support structure according to a further embodiment of the invention;
- Fig. 13: shows a schematic illustration of a fastening system according to a further embodiment of the invention at the beginning of the attachment method;
- Fig. 14: shows a schematic illustration of a fastening system according to a further embodiment of the invention at the end of the attachment method and at the beginning of the detachment method;
- Fig. 15: shows a schematic illustration of a fastening system according to a further embodiment of the invention at the end of the detachment method.

The accompanying figures are intended to convey a further understanding of the embodiments of the invention. They illustrate embodiments and are used in conjunction with the description to explain principles and concepts of the invention. Other embodiments and many of the cited advantages emerge in light of the drawings. The elements of the drawings are not necessarily shown to scale in relation to one another. Direction-indicating terminology such as for example "at the top", "at the bottom", "on the left", "on the right", "above", "below", "horizontally", "vertically", "at the front", "at the rear" and similar statements are merely used for explanatory purposes and do not serve to restrict the generality to specific configurations as shown in the figures.

In the figures of the drawing, elements, features and components that are the same, have the same function and have the same effect are each provided with the same reference signs - unless explained otherwise.

An elastically deformable element in the meaning of this application is an elastic object that stores mechanical energy. An elastically deformable element is typically made of spring steel, an elastomer or similar materials.

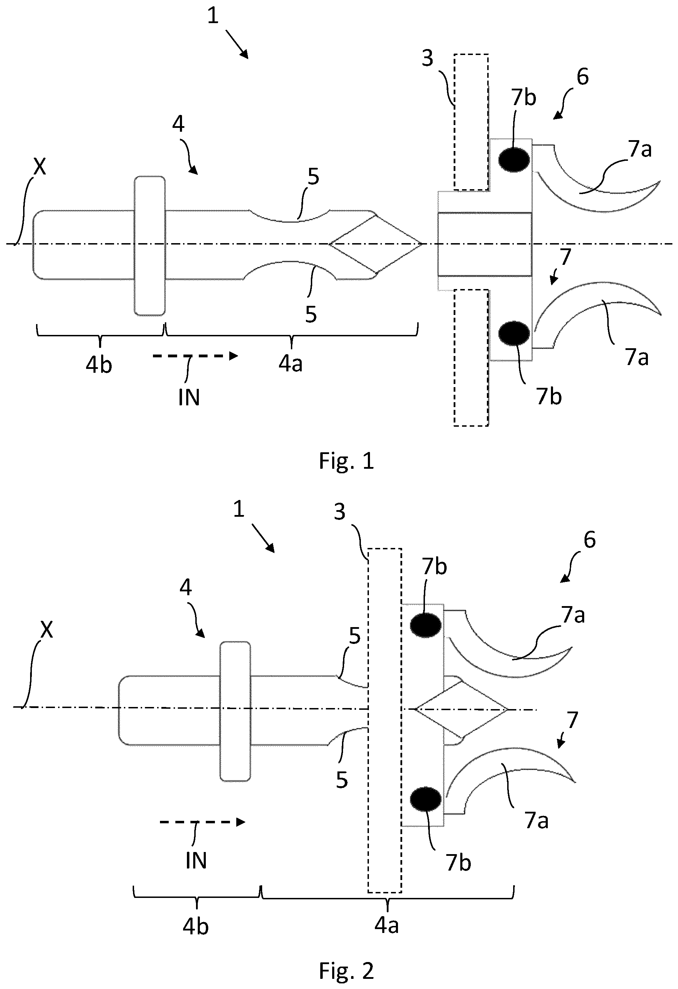

Fig. 1 shows a schematic illustration of a fastening device 1 for fastening a mechanical element with a support structure 3. The fastening device 1 comprises a locking bolt 4 and a locking mechanism 6.

The locking bolt 4 is configured for mounting a mechanical element, wherein the locking bolt 4 comprises at least one recess 5, which is located on at least a section of the shell surface of the locking bolt 4. Here, the at least one recess 5 comprises two recesses, which substantially extend along a longitudinal axis X. The locking bolt 4 has a shaft 4a and a bolt head 4b. The shell surface of the locking bolt 4 corresponds to the inner shell of the locking mechanism 6. The two recesses 5 are arranged between the bolt head 4b and a front area of the locking bolt 4. For example, the two recesses 5 are configured as a longitudinal groove. In particular, the two recesses 5 have the same cross-sectional shape.

Furthermore, the locking bolt 4 comprises a tapered front area. The bolt head 4b comprises an end extending away from the shaft 4a of the locking bolt 4, wherein the end comprises at least one recess for engaging with an interface of a secondary structure. Alternatively, the locking bolt 4 can comprise a recess 5, which is circumferential around the shell surface of the locking bolt 4.

The locking mechanism 6 is mountable to a support structure 3 and comprises an elastically deformable element 7 for engaging with the at least one recess 5 of the locking bolt 4. The elastically deformable element 7 is configured to block a movement of the locking bolt 4 relative to the locking mechanism 6 along the longitudinal axis X against an installation direction IN and to not block the movement in an installation direction IN.

The elastically deformable element 7 exemplarily comprises two pivotable arms 7a, which are positioned at least sectionwise around the longitudinal axis X and have a pivot axis substantially perpendicular to the longitudinal axis X. The two pivotable arms 7a can be hinged to the locking mechanism 6 by means of a torsion spring 7b or similar.

Here, the locking bolt 4 comprises a tapered front area for self-centering. Furthermore, the locking bolt 4 can have a square or a circular cross-sectional shape. In particular, the shaft 4a of the locking bolt 4 has a square or a circular cross-sectional shape.

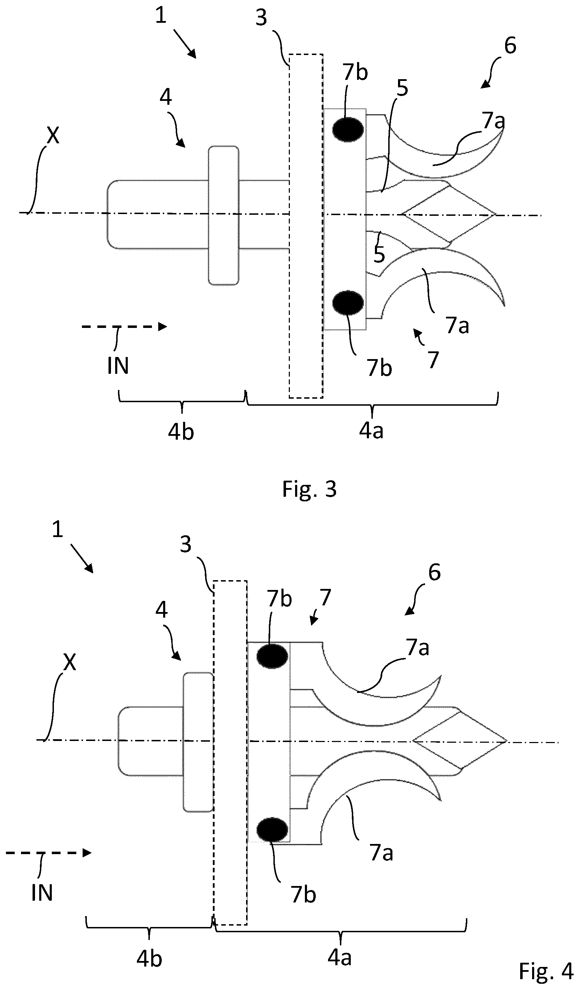

Fig. 2 and Fig. 3 each show a schematic illustration of the fastening device 1 of Fig. 1 in an intermediate position.

In the installation direction IN the locking bolt 4 is slidable in relation to the locking mechanism 6 in a locked position of the fastening device 1. When the locking bolt 4 is housed in the locking mechanism 6, the elastically deformable element 7 is at least sectionwise in contact with the locking bolt 4, in particular during sliding of the locking bolt 4 in relation to the locking mechanism 6 in the installation direction IN, as it is specifically illustrated in Fig. 3. The locking mechanism 6 can be pre-assembled at the support structure 3. With a pre-assembled locking mechanism 6 the locking bolt 4 can be mounted from one side only, wherein the locking bolt 4 is fixed automatically when inserted into the locking mechanism 6.

Furthermore, the elastically deformable element 7 is pre-tensioned when in contact with the locking bolt 4 or engaged with the at least one recess 5.

Fig. 4 shows a schematic illustration of the fastening device 1 of Fig. 1 in a locked position.

In particular, Fig. 4 shows the fastening device 1 in the locked position, in which the locking bolt 4 reaches through a hole of the support structure 3 and in an insertion area of the locking mechanism 6. In the locked position, the two pivotable arms 7a have a positively-locking connection or form fit, respectively, with the two recesses 5 of the locking bolt 4.

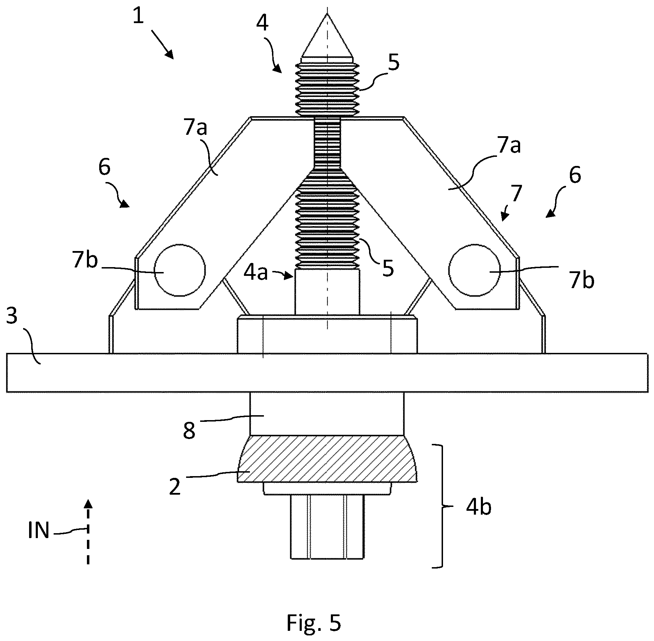

Fig. 5 shows a schematic illustration in a side view of a fastening system for fastening a mechanical element 2 with a support structure 3. Specifically, Fig. 5 shows a fastening system comprising a fastening device 1 for fastening a cabin fitting element 2 to a frame of an aircraft 3.

The exemplary fastening system comprises the fastening device 1 and a mechanical element 2 as well as a support structure 3. The mechanical element 2 can be configured as a crown module sub-structure element, for example a cabin fitting element, with a hole at an end of the element. The support structure 3 is a frame of an airport, wherein the frame 3 comprises a through-hole. The fastening device 1 can be installed in the through-hole of the frame 3.

The fastening device 1 is arranged at the support structure 3 and comprises a locking bolt 4, a locking mechanism 6 and a bush 8.

The locking bolt 4 is configured for mounting a mechanical element, wherein the locking bolt 4 comprises at least one recess 5, which is located on at least a section of the shell surface of the locking bolt 4. Here, the at least one recess 5 comprises a plurality of recesses, which are circumferential around the shell surface of the locking bolt 4. For example, the plurality of recesses 5 is configured as circumferential grooves. In particular, each recess of the plurality of recesses 5 has the same cross-sectional shape. The locking bolt 4 comprises a shaft 4a and a bolt head 4b, which is releasably fixed on the shaft 4a, in particular screwed on the shaft 4a. The shell surface of the locking bolt 4 corresponds to the inner shell of the bush 8. The plurality of recesses are arranged between the bolt head 4b and a front area of the locking bolt 4.

Here, the bolt head 4b comprises a spherical shape for rotary attachment of the sub-structure element 2. The sub-structure element 2 is positively locked with the fastening device 1. Furthermore, the bolt head 4b comprises an end extending away from the shaft 4a of the locking bolt 4, wherein the end comprises at least one recess for engaging with an interface of a secondary structure. The at least one recess of the bolt head 4b can be configured like the recesses 5 of the locking bolt 4. Furthermore, the locking bolt 4 comprises a tapered front area.

The locking mechanism 6 is mountable to a support structure 3 and comprises an elastically deformable element 7 for engaging with the plurality of recesses 5 of the locking bolt 4. The elastically deformable element 7 is configured to block a movement of the locking bolt 4 relative to the locking mechanism 6 along the longitudinal axis X against an installation direction IN and to not block the movement in an installation direction IN.

The elastically deformable element 7 exemplarily comprises two pivotable arms 7a, which are positioned at least sectionwise around the longitudinal axis X and have a pivot axis substantially perpendicular to the longitudinal axis X. The two pivotable arms 7a are hinged to the locking mechanism 6 by means of a torsion spring 7b. Hence, the elastically deformable element 7 comprises a stiff section 7a corresponding to the pivotable arm and an elastically deformable section 7b. The elastically deformable section 7b is configured as a torsion spring. Here, the locking bolt 4 also comprises a tapered front area for self-centering.

The fastening device 1 mounts the sub-structure element 2 or the secondary structure, respectively, to the frame 3 by a positively-locking connection, as it is illustrated in Fig. 5. When in the locked position, the fastening device 1 can bear loads, which are charged on the fastening system in the longitudinal direction X and/or perpendicular to the longitudinal direction X. To compensate inaccuracies the hole of the crown module sub-structure element 2 through which the locking bolt 4 passes, has a greater diameter than the shell surface of the locking bolt 4, such that there is a gap between the shell surface and the crown module sub-structure element 2. Therefore, the crown module sub-structure element 2 can move in relation to the fastening device 1 perpendicular to the longitudinal axis X.

The bush 8 is releasably connectable to the locking mechanism 6 and configured to guide the locking bolt 4 through the locking mechanism 6. In particular, the bush 8 is screwed on the locking mechanism 6. Therefore, the locking mechanism 6 has an inner thread, and the bush 8 has a corresponding outer thread. The bush 8 can be used for pre-assembling the locking mechanism 6 at the frame 3.

The exemplary fastening device 1 can be applied at variable frame thicknesses of the frame 3.

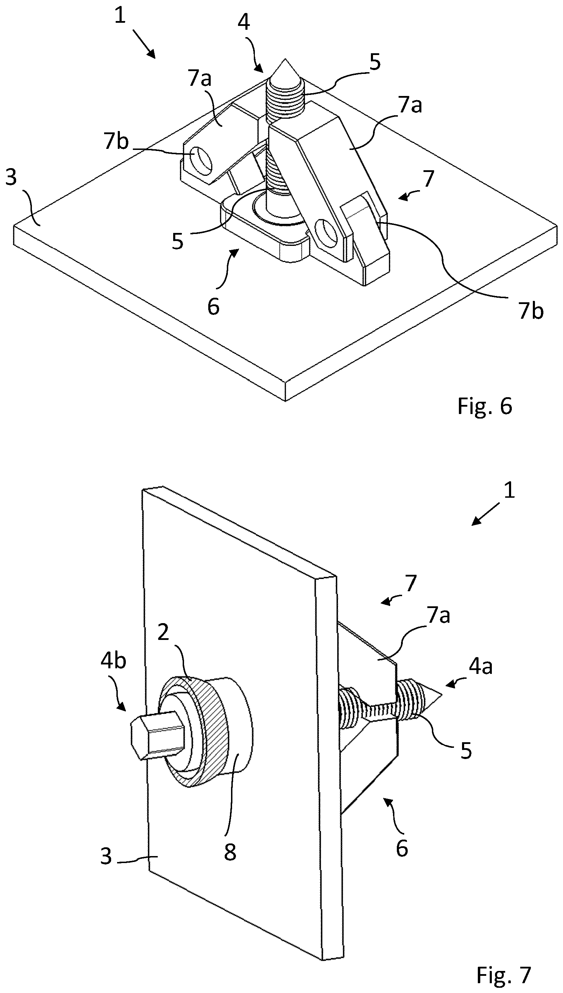

Fig. 6 shows a schematic illustration in a perspective view of the fastening system of Fig. 5 focusing on a first side of the support structure 3.

The support structure or frame 3 can comprise the first side and a second side opposite to the first side. The locking mechanism 6 can be arranged at the first side of the frame 3, for example. The sub-structure element 2 can be arranged at the second side.

Each pivotable arm 7a comprises at least one protrusion for engaging with the recesses 5 of the locking bolt 4. Thus, the protrusion geometrically corresponds to the recess 5 such that they can engage with each other.

Loads applying to the locking bolt 4 against the installation direction IN can be beared by the pivotable arms 7a, that means the stiff sections of the locking mechanism 6. The torsion spring 7b does not bear loads applying to the locking bolt 4 against the installation direction IN. The torsion spring 7b keeps the pivotable arm 7a in touch with the locking bolt 4, in particular with its recesses 5.

Fig. 7 shows a schematic illustration in a perspective view of the fastening system of Fig. 5 focusing on the second side of the support structure 3.

For example, the bolt head 4b has a hexagon-shaped interface for unlocking/separating the bolt head 4b from the shaft 4a with a standard tool.

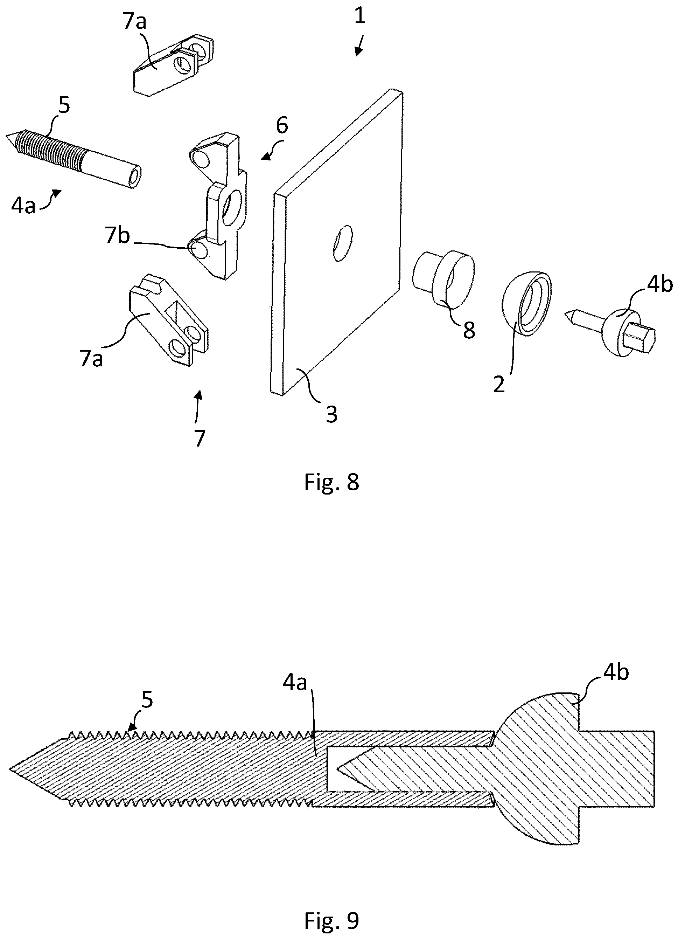

Fig. 8 shows a schematic illustration in an explosion view of the fastening system of Fig. 5. As it is illustrated in Fig. 8, the bolt head 4b is releasable from the shaft 4a.

Fig. 9 shows a schematic illustration in a cut view of a locking bolt 4.

The locking bolt 4 comprises a shaft 4a and a bolt head 4b. The locking bolt 4 in Fig. 9 distinguishes from the locking bolt of Fig. 1 to 8 in that the shaft 4a has an inner thread, and the bolt head 4b has a corresponding outer thread. The skilled person can configure the releasable fixation of the shaft 4a and the bolt head 4b such that any load can be carried by the locking bolt 4. For example, the skilled person can choose thread parameters, like a thread height, a pitch or a thread form, of the thread connection according to the load of the mechanical element 2.

Furthermore, the bolt head 4b has a spherical shape. The shaft 4a comprises a plurality of recesses 5 and a cone-shaped front area.

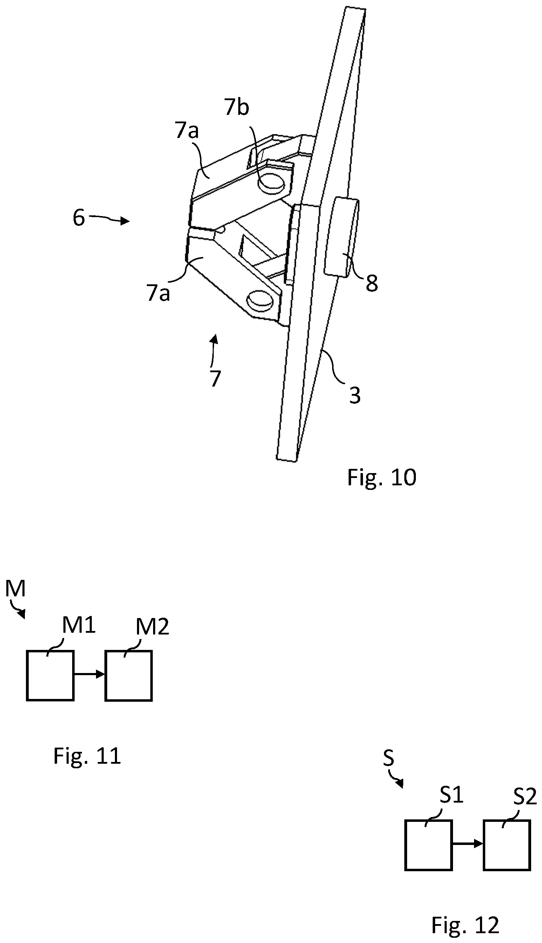

Fig. 10 shows a schematic illustration in a perspective view of a locking mechanism 6, which is mounted to a support structure 3.

For example, the locking mechanism 6 can be firmly bonded to the support structure 3, but is not limited thereto. Thereby, the locking mechanism 6 can be welded or adhered to the support structure 3.

Alternatively or additionally, a bush 8, which is releasably connectable to the locking mechanism 6 and configured to guide the locking bolt 4 through the locking mechanism 6 is provided as it is illustrated in Fig. 10. In particular, the bush 8 is screwed on the locking mechanism 6, wherein the locking mechanism 6 has an inner thread, and the bush 8 has a corresponding outer thread.

Fig. 11 shows a flow chart for an attachment method M for fastening a fastening device for fastening a mechanical element 2 with a support structure 3.

The attachment method M comprises the steps of mounting M1 and axially moving M2.

In the step of mounting M1, the locking mechanism 6 is mounted to a support structure 3 at a first side of the support structure 3 facing in an installation direction IN. The first side can correspond to a back side of the support structure 3. Thus, a locking mechanism 6 can be mounted to the first side or back side, respectively, of the support structure 3, wherein the installation direction IN is directed from a front side or second side, respectively, of the support structure 3 to the backside.

In the step of axially moving M2, a locking bolt 4 of the fastening device is axially moved in the installation direction IN into the locking mechanism 6 of the fastening device, wherein the locking mechanism 6 comprises an elastically deformable element 7 for engaging with at least one recess 5 of the locking bolt, wherein the elastically deformable element 7 is configured to block a movement of the locking bolt 4 relative to the locking mechanism 6 along a longitudinal axis X against the installation direction IN and to not block the movement in the installation direction IN.

Fig. 12 shows a flow chart for a detachment method S for unfastening a fastening device for fastening a mechanical element 2 with a support structure 3.

The detachment method S comprises the steps of releasing S1 and axially moving S2.

In the step of releasing S1, a bolt head 4b of a locking bolt 4 of the fastening device is released from a shaft 4a of the locking bolt 4.

In the step of axially moving S2, the shaft 4a is moved in an installation direction IN until the shaft 4a is released from a locking mechanism 6 of the fastening device.

In particular, in the step of releasing S1, the bolt head 4b can be unscrewed from the shaft 4a. Furthermore, in the step of axially moving S2, the shaft 4a can be pulled or pushed in the installation direction IN.

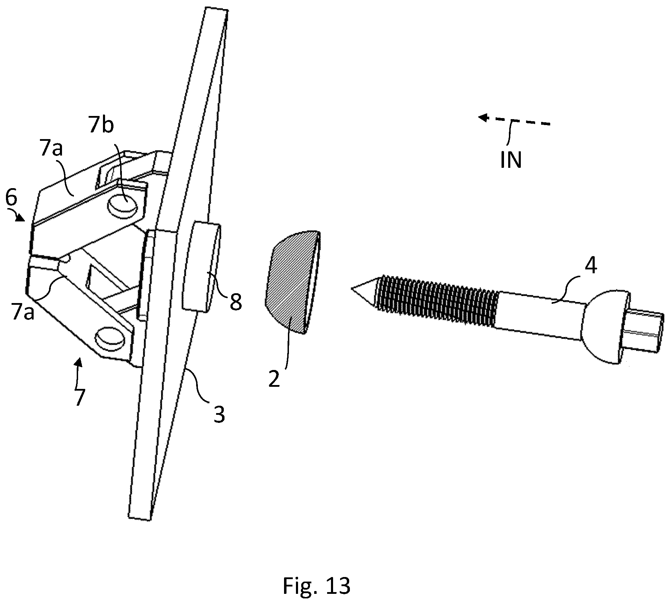

Fig. 13, 14 and 15 shows a schematic illustration of a fastening system 1. The fastening system comprises a fastening device 1 for fastening a mechanical element 2 with a support structure 3 with the features according to one of the fastening devices 1 of Fig. 1 to 10.

Specifically, Fig. 13 illustrates the fastening system at the beginning of the attachment method M. Here, the locking mechanism 6 is pre-assembled at the support structure 3, in particular by the bush 8. The locking bolt 4 is aligned with the locking mechanism 6 and the bush 8, respectively. Hence, the locking bolt 4 can be pushed in the installation direction IN to pass through the bush 8 and engage with the elastically deformable element 7.

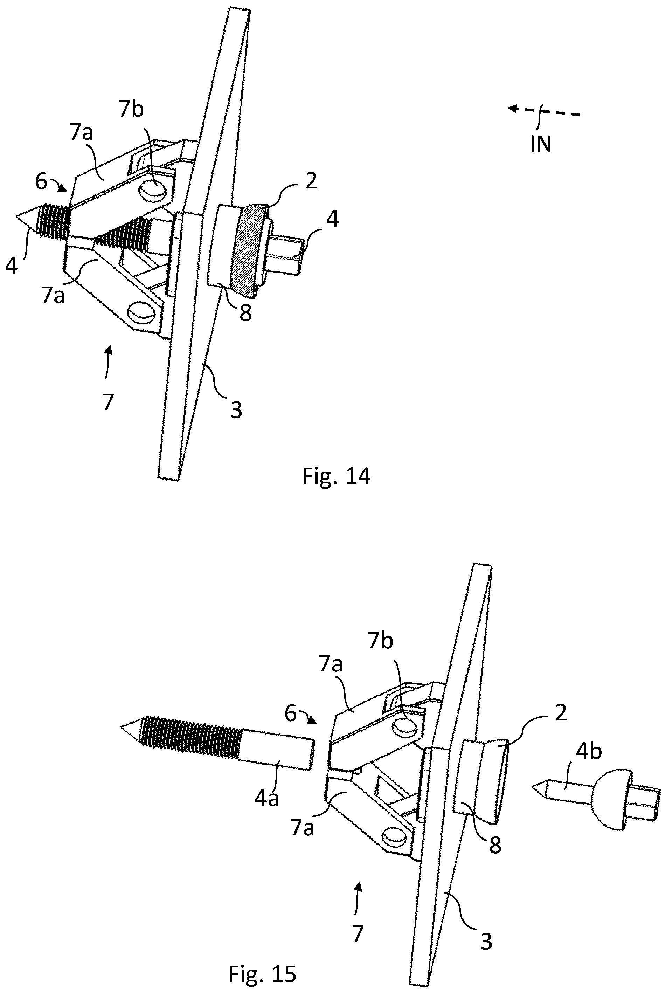

Moreover, Fig. 14 illustrates the fastening system at the end of the attachment method M and at the beginning of the detachment method S. The locking bolt 4 is engaged with the locking mechanism 6.

In Fig. 15, the fastening system at the end of the detachment method S is illustrated. The bolt head 4b is released from the shaft 4a. The bolt head 4b is removed by unscrewing, for example. The shaft 4a thereby remains inside the locking mechanism 6. Then, the shaft 4a can be removed from the locking mechanism 6 by pushing or pulling the shaft in the installation direction IN through the elastically deformable element 7.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present invention(s) is disclosed herein, it should be understood that modifications, substitutions and alternatives may be apparent to one of ordinary skill in the art and can be made without departing from the scope of the invention, which is defined by the appended claims. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise.

### Reference list

- 1: fastening device
- 2: mechanical element
- 3: support structure
- 4: locking bolt
- 4a: shaft
- 4b: bolt head
- 5: at least one recess
- 6: locking mechanism
- 7: elastically deformable element
- 7a: stiff section
- 7b: elastically deformable section
- 8: bush

- X: longitudinal axis
- IN: installation direction

- M: attachment method
- M1: mounting
- M2: axially moving
- S: detachment method
- S1: releasing
- S2: axially moving

## Claims

1. Fastening device (1) for fastening a mechanical element (2) with a support structure (3), in particular for fastening a cabin fitting element to a frame of an aircraft, the fastening device (1) comprising:
a locking bolt (4) for mounting a mechanical element (2), wherein the locking bolt (4) comprises at least one recess (5), which is located on at least a section of the shell surface of the locking bolt (4), wherein the locking bolt (4) comprises a shaft (4a) and a bolt head (4b), which is releasably fixed on the shaft (4a), and
a locking mechanism (6), which is mountable to a support structure (3) and comprises an elastically deformable element (7) for engaging with the at least one recess (5) of the locking bolt (4), wherein the elastically deformable element (7) is configured to block a movement of the locking bolt (4) relative to the locking mechanism (6) along a longitudinal axis (X) against an installation direction (IN) and to not block the movement in an installation direction (IN), **characterized in that** the bolt head (4b) comprises a spherical shape for rotary attachment of the mechanical element (2).

2. Fastening device (1) according to claim 1, wherein the bolt head (4b) is screwed on the shaft (4a).

3. Fastening device (1) according to claim 1 or 2, wherein the bolt head (4b) comprises an end extending away from the shaft (4a) of the locking bolt (4), wherein the end comprises at least one recess for engaging with an interface of a secondary structure.

4. Fastening device (1) according to one of the preceding claims, wherein the at least one recess (5) is circumferential around the shell surface of the locking bolt (4) and/or has a rectangular, a triangular or a curved cross-sectional shape.

5. Fastening device (1) according to one of the claims 1 to 3, wherein the at least one recess (5) substantially extends along the longitudinal axis (X) and is arranged between a bolt head (4b) and a front area of the locking bolt (4).

6. Fastening device (1) according to one of the preceding claims, wherein the elastically deformable element is pre-tensioned when in contact with the locking bolt or engaged with the at least one recess.

7. Fastening device (1) according to one of the preceding claims, wherein the elastically deformable element (7) comprises at least one pivotable arm (7a), which is positioned at least sectionwise around the longitudinal axis (X) and has a pivot axis substantially perpendicular to the longitudinal axis (X).

8. Fastening device (1) according to one of the preceding claims, further comprising a bush (8), which is releasably connectable to the locking mechanism (6) and configured to guide the locking bolt (4) through the locking mechanism (6).

9. Fastening system, comprising:
a support structure (3);
a fastening device (1) according to one of the preceding claims, which is arranged at the support structure (3); and
a mechanical element (2), which is positively locked with the fastening device (1).

10. Fastening system according to claim 9, wherein the support structure (3) is configured as a frame of an aircraft, and wherein the mechanical element (2) is configured as a cabin fitting element.

11. Attachment method (M) for fastening a fastening device (1) according to one of the claims 1 to 8, the method (M) comprising:
axially moving (M2) the locking bolt (4) of the fastening device (1) in the installation direction (IN) into the locking mechanism (6) of the fastening device (1), wherein the locking mechanism (6) comprises the elastically deformable element (7) for engaging with the at least one recess (5) of the locking bolt (4), wherein the elastically deformable element (7) is configured to block a movement of the locking bolt (4) relative to the locking mechanism (6) along the longitudinal axis (X) against the installation direction (IN) and to not block the movement in the installation direction (IN).

12. Attachment method (M) according to claim 11, further comprising mounting (M1) the locking mechanism (6) to a support structure (3) at a first side of the support structure (3) facing in the installation direction (IN).

13. Detachment method (S) for unfastening a fastening device (1) according to one of the claims 1 to 8, the method (S) comprising:
releasing (S1) the bolt head (4b) of the locking bolt (4) of the fastening device (1) from the shaft (4a) of the locking bolt (4); and
axially moving (S2) the shaft (4a) in the installation direction (IN) until the shaft (4a) is released from the locking mechanism (6) of the fastening device (1).

14. Detachment method (S) according to claim 13, wherein in releasing (S1) the bolt head (4b) is unscrewed from the shaft (4a), and wherein in axially moving (S2) the shaft (4a) is pulled or pushed in the installation direction (IN).

## Patentansprüche

1. Befestigungsvorrichtung (1) zur Befestigung eines mechanischen Elements (2) mit einer Trägerstruktur (3), insbesondere zur Befestigung eines Kabinenausstattungselements an einem Rahmen eines Flugzeugs, wobei die Befestigungsvorrichtung (1) Folgendes umfasst:
einen Verriegelungsbolzen (4) zum Montieren eines mechanischen Elements (2), wobei der Verriegelungsbolzen (4) mindestens eine Ausnehmung (5) aufweist, die sich an mindestens einem Abschnitt der Mantelfläche des Verriegelungsbolzens (4) befindet, wobei der Verriegelungsbolzen (4) einen Schaft (4a) und einen Bolzenkopf (4b) aufweist, der lösbar an dem Schaft (4a) fixiert ist, und
einen Verriegelungsmechanismus (6), der an einer Trägerstruktur (3) montierbar ist und ein elastisch verformbares Element (7) zum Eingriff mit der mindestens einen Ausnehmung (5) des Verriegelungsbolzens (4) aufweist, wobei das elastisch verformbare Element (7) dazu ausgebildet ist, eine Bewegung des Verriegelungsbolzens (4) relativ zu dem Verriegelungsmechanismus (6) entlang einer Längsachse (X) entgegen einer Installationsrichtung (IN) zu blockieren und die Bewegung in einer Installationsrichtung (IN) nicht zu blockieren, **dadurch gekennzeichnet, dass** der Bolzenkopf (4b) eine sphärische Form zur Drehbefestigung des mechanischen Elements (2) aufweist.

2. Befestigungsvorrichtung (1) nach Anspruch 1, wobei der Bolzenkopf (4b) auf den Schaft (4a) geschraubt ist.

3. Befestigungsvorrichtung (1) nach Anspruch 1 oder 2, wobei der Bolzenkopf (4b) ein Ende aufweist, das sich von dem Schaft (4a) des Verriegelungsbolzens (4) weg erstreckt, wobei das Ende mindestens eine Ausnehmung zum Eingriff mit einer Schnittstelle einer Sekundärstruktur umfasst.

4. Befestigungsvorrichtung (1) nach einem der vorhergehenden Ansprüche, wobei die mindestens eine Ausnehmung (5) des Verriegelungsbolzens (4) in Umfangsrichtung um die Mantelfläche des Verriegelungsbolzens verläuft und/oder eine rechteckige, eine dreieckige oder eine gekrümmte Querschnittsform aufweist.

5. Befestigungsvorrichtung (1) nach einem der Ansprüche 1 bis 3, wobei sich die mindestens eine Ausnehmung (5) im Wesentlichen entlang der Längsachse (X) erstreckt und zwischen einem Bolzenkopf (4b) und einem vorderen Bereich des Verriegelungsbolzens (4) angeordnet ist.

6. Befestigungsvorrichtung (1) nach einem der vorhergehenden Ansprüche, wobei das elastisch verformbare Element vorgespannt ist, wenn es in Kontakt mit dem Verriegelungsbolzen steht oder mit der mindestens einen Ausnehmung in Eingriff steht.

7. Befestigungsvorrichtung (1) nach einem der vorhergehenden Ansprüche, wobei das elastisch verformbare Element (7) mindestens einen schwenkbaren Arm (7a) aufweist, der mindestens abschnittsweise um die Längsachse (X) positioniert ist und eine Schwenkachse im Wesentlichen senkrecht zur Längsachse (X) aufweist.

8. Befestigungsvorrichtung (1) nach einem der vorhergehenden Ansprüche, ferner umfassend eine Buchse (8), die lösbar mit dem Verriegelungsmechanismus (6) verbindbar ist und dazu ausgebildet ist, den Verriegelungsbolzen (4) durch den Verriegelungsmechanismus (6) zu führen.

9. Befestigungssystem, umfassend:
eine Trägerstruktur (3);
eine Befestigungsvorrichtung (1) nach einem der vorhergehenden Ansprüche, die an der Trägerstruktur (3) angeordnet ist; und
ein mechanisches Element (2), das formschlüssig mit der Befestigungsvorrichtung (1) verriegelt ist.

10. Befestigungssystem nach Anspruch 9, wobei die Trägerstruktur (3) als ein Rahmen eines Flugzeugs ausgebildet ist und wobei das mechanische Element (2) als ein Kabinenausstattungselement ausgebildet ist.

11. Befestigungsverfahren (M) zur Befestigung einer Befestigungsvorrichtung (1) nach einem der Ansprüche 1 bis 8, wobei das Verfahren (M) Folgendes umfasst:
axiales Bewegen (M2) des Verriegelungsbolzens (4) der Befestigungsvorrichtung (1) in Installationsrichtung (IN) in den Verriegelungsmechanismus (6) der Befestigungsvorrichtung (1), wobei der Verriegelungsmechanismus (6) das elastisch verformbare Element (7) zum Eingriff mit der mindestens einen Ausnehmung (5) des Verriegelungsbolzens (4) umfasst, wobei das elastisch verformbare Element (7) dazu ausgebildet ist, eine Bewegung des Verriegelungsbolzens (4) relativ zu dem Verriegelungsmechanismus (6) entlang der Längsachse (X) entgegen der Installationsrichtung (IN) zu blockieren und die Bewegung in der Installationsrichtung (IN) nicht zu blockieren.

12. Befestigungsverfahren (M) nach Anspruch 11, ferner umfassend Montieren (M1) des Verriegelungsmechanismus (6) an einer Trägerstruktur (3) an einer ersten Seite der Trägerstruktur (3), die in die Installationsrichtung (IN) weist.

13. Löseverfahren (S) zum Lösen einer Befestigungsvorrichtung (1) nach einem der Ansprüche 1 bis 8, wobei das Verfahren (S) Folgendes umfasst:
Freigeben (S1) des Bolzenkopfs (4b) des Verriegelungsbolzens (4) der Befestigungsvorrichtung (1) von dem Schaft (4a) des Verriegelungsbolzens (4); und
axiales Bewegen (S2) des Schafts (4a) in die Installationsrichtung (IN), bis der Schaft (4a) vom Verriegelungsmechanismus (6) der Befestigungsvorrichtung (1) freigegeben ist.

14. Löseverfahren (S) nach Anspruch 13, wobei beim Freigeben (S1) der Bolzenkopf (4b) von dem Schaft (4a) losgeschraubt wird und wobei beim axialen Bewegen (S2) der Schaft (4a) in die Installationsrichtung (IN) gezogen oder geschoben wird.

## Revendications

1. Dispositif de fixation (1) pour fixer un élément mécanique (2) à une structure de support (3), en particulier pour fixer un élément d'aménagement de cabine à un châssis d'un aéronef, le dispositif de fixation (1) comprenant :
un boulon de verrouillage (4) destiné au montage d'un élément mécanique (2), le boulon de verrouillage (4) comprenant au moins un évidement (5), qui est situé sur au moins une section de la surface d'enveloppe du boulon de verrouillage (4), le boulon de verrouillage (4) comprenant une tige (4a) et une tête de boulon (4b), qui est fixée de manière amovible sur la tige (4a), et
un mécanisme de verrouillage (6), qui peut être monté sur une structure de support (3) et qui comprend un élément élastiquement déformable (7) destiné à coopérer avec au moins un évidement (5) du boulon de verrouillage (4), l'élément élastiquement déformable (7) étant configuré pour bloquer un mouvement du boulon de verrouillage (4) par rapport au mécanisme de verrouillage (6) le long d'un axe longitudinal (X) à l'encontre d'une direction d'installation (IN) et pour ne pas bloquer le mouvement dans une direction d'installation (IN), **caractérisé en ce que** la tête de boulon (4b) comprend une forme sphérique pour la fixation rotative de l'élément mécanique (2).

2. Dispositif de fixation (1) selon la revendication 1, dans lequel la tête de boulon (4b) est vissée sur la tige (4a).

3. Dispositif de fixation (1) selon la revendication 1 ou 2, dans lequel la tête de boulon (4b) comprend une extrémité s'étendant à l'opposé de la tige (4a) du boulon de verrouillage (4), l'extrémité comprenant au moins un évidement destiné à coopérer avec une interface d'une structure secondaire.

4. Dispositif de fixation (1) selon l'une des revendications précédentes, dans lequel l'au moins un évidement (5) est circonférentiel autour de la surface d'enveloppe du boulon de verrouillage (4) et/ou a une forme de section transversale rectangulaire, triangulaire ou incurvée.

5. Dispositif de fixation (1) selon l'une des revendications 1 à 3, dans lequel l'au moins un évidement (5) s'étend essentiellement le long de l'axe longitudinal (X) et est disposé entre une tête de boulon (4b) et une zone frontale du boulon de verrouillage (4).

6. Dispositif de fixation (1) selon l'une des revendications précédentes, dans lequel l'élément élastiquement déformable est précontraint lorsqu'il est en contact avec le boulon de verrouillage ou qu'il coopère avec l'au moins un évidement.

7. Dispositif de fixation (1) selon l'une des revendications précédentes, dans lequel l'élément élastiquement déformable (7) comprend au moins un bras pivotant (7a), qui est positionné, au moins par sections, autour de l'axe longitudinal (X) et qui a un axe de pivotement essentiellement perpendiculaire à l'axe longitudinal (X).

8. Dispositif de fixation (1) selon l'une des revendications précédentes, comprenant en outre une douille (8), qui peut être raccordée de manière amovible au mécanisme de verrouillage (6) et qui est configurée pour guider le boulon de verrouillage (4) à travers le mécanisme de verrouillage (6).

9. Système de fixation, comprenant :
une structure de support (3) ;
un dispositif de fixation (1) selon l'une des revendications précédentes, qui est disposé au niveau de la structure de support (3) ; et
un élément mécanique (2), qui est verrouillé par engagement positif avec le dispositif de fixation (1).

10. Système de fixation selon la revendication 9, dans lequel la structure de support (3) est configurée sous forme de châssis d'un aéronef, et dans lequel l'élément mécanique (2) est configuré sous forme d'élément d'aménagement de cabine.

11. Procédé de fixation (M) d'un dispositif de fixation (1) selon l'une des revendications 1 à 8, le procédé (M) comprenant :
le déplacement axial (M2) du boulon de verrouillage (4) du dispositif de fixation (1) selon la direction de montage (IN) dans le mécanisme de verrouillage (6) du dispositif de fixation (1), le mécanisme de verrouillage (6) comprenant l'élément élastiquement déformable (7) destiné à coopérer avec l'au moins un évidement (5) du boulon de verrouillage (4), l'élément élastiquement déformable (7) étant configuré pour bloquer un mouvement du boulon de verrouillage (4) par rapport au mécanisme de verrouillage (6) le long d'un axe longitudinal (X) à l'encontre d'une direction d'installation (IN) et pour ne pas bloquer le mouvement dans une direction d'installation (IN).

12. Procédé de fixation (M) selon la revendication 11, comprenant en outre le montage (M1) du mécanisme de verrouillage (6) sur une structure de support (3) au niveau d'un premier côté de la structure de support (3) orienté dans la direction d'installation (IN).

13. Procédé de démontage (S) d'un dispositif de fixation (1) selon l'une des revendications 1 à 8, le procédé (S) comprenant :
la libération (S1) de la tête de boulon (4b) du boulon de verrouillage (4) du dispositif de fixation (1) d'avec la tige (4a) du boulon de verrouillage (4) ; et
le déplacement axial (S2) de la tige (4a) dans la direction d'installation (IN) jusqu'à ce que la tige (4a) soit libérée du mécanisme de verrouillage (6) du dispositif de fixation (1).

14. Procédé de détachement (S) selon la revendication 13, dans lequel, lors de la libération (S1), la tête de boulon (4b) est dévissée de la tige (4a), et dans lequel, lors du déplacement axial (S2), la tige (4a) est tirée ou poussée dans la direction d'installation (IN).
